# EUROPEAN PATENT SPECIFICATION

(11) **EP 2 869 546 B1**
(45) Date of publication and mention of the grant of the patent: **26.12.2018**
(21) Application number: 13306487.3
(22) Date of filing: 31.10.2013
(51) Int. Cl.: H04M 3/56, G06K 9/00, H04N 7/15, G06F 17/30, G11B 27/19, H04L 29/06, G06K 9/32, G11B 27/28, G10L 15/26, H04N 21/858, G10L 25/54

(54) **Method and system for providing access to auxiliary information**
Verfahren und System zur Bereitstellung von Zugriff auf Zusatzinformationen
Procédé et système pour fournir un accès à des informations auxiliaires

(43) Date of publication of application: 06.05.2015
(73) Proprietor: Alcatel Lucent, 91620 Nozay (FR)
(72) Inventor: Namboodiri, Vinay, 2018 Antwerp (BE); Tytgat, Donny, 2018 Antwerp (BE); Aerts, Maarten, 2018 Antwerp (BE); Lievens, Sammy, 2018 Antwerp (BE)
(74) Representative: Nokia EPO representatives

(56) References cited:
- WO-A1-2012/057665
- US-A1- 2005 022 252
- US-A1- 2008 159 383
- US-A1- 2009 259 633
- US-A1- 2010 246 965

## Description

### Field of Invention

The invention relates to a method and system for access to auxiliary information in a video- and/or audio-conference.

### Background

A video- and/or audio conference is a conference in which participating device or participants (for instance, communication devices such as desktop computers and/or mobile devices such as laptops, smart phones, etc.) in different locations are able to communicate with each other in sound and vision. The communication can be point-to-point, for instance from the organizer of the conference (i.e. the video- and/or audio conferencing system) to one participant (unidirectional) or between the organizer and the participant (bidirectional). The communication may also involve several (multipoint) sites at multiple locations enabling multidirectional communication. Each participant may be serving one or more users.

During such conference, users may need auxiliary information to better comprehend the content of the communication. For example, in technical meetings the video or audio may contain technical terms that are not common knowledge to the recipient (i.e. the user of the participating device). In these cases it would be helpful for the user to receive auxiliary information from the video- and/or audio conferencing system. For instance, it may be helpful for the user to receive a diagram that can be used as reference, a technical definition of technical terms or keywords used in the conference, etc.

Document US 2009/0259633 relates to a universal lookup of video-related data, wherein a video device may request information associated with specific video content, based on an identified video content identifier. It is an object of the present invention to provide a method and system for improving the user's comprehension of the content of an audio- and/or video conference.

### Summary

The invention is set out in the appended set of claims. The embodiments and/or examples of the following description which are not covered by the appended claims are considered as not being part of the present invention. According to a first aspect of the invention this object may be achieved in a method for tag based access to auxiliary information during a video- and/or audio-conference, the video- and/or audio conference involving a video- and/or audio conferencing system comprising a mapping between tags and associated portions of auxiliary information, the method comprising:
- transmitting video data and/or or audio data from the video- and/or audio-conferencing system to participants of the video-conference;
- extracting tags from the video data and/or audio data being transmitted;
- upon receiving a request for auxiliary information from a participant:
   - selecting at least one of the tags extracted from the transmitted video data and/or audio data;
   - retrieving at least one auxiliary information portion associated with the selected at least one tag;
   - transmitting the at least one retrieved auxiliary information portion to the participant that has requested the auxiliary information.

The auxiliary information may be displayed on the participant's rendering device so that the information is readily available. By providing the participant (and therefore the user) with access to this auxiliary information during a conference and in a seamless manner through the use of tags (i.e. visual tags and/or audio tags), the conferencing experience may be increased considerably. Suppose the user needs access to auxiliary information then the system extracts relevant tags from audio and/or video and then based on a mapping provides access to the auxiliary information.

Another way of providing auxiliary information would be for each user to explicitly access the browser on his communication device and look for the auxiliary information on the internet. This is in terms of explicit "pull" by the user. However, this may require a considerable effort and time and may reduce the contribution of the users during the conference. Another option for providing the auxiliary information may be to push the auxiliary information to all of the participants, for instance the peripheral devices of their users. However, the information may not be useful to each user or it may distract (other) users from the conference. According to aspects of the invention each of the participants may be presented with auxiliary information that is specifically requested by the individual participant.

In embodiments of the invention the method comprises transmitting the at least one retrieved auxiliary information portion only to the participant that has requested the auxiliary information. An advantage is that other participants not having requested auxiliary information or having requested different auxiliary information are not bothered with receiving auxiliary information that is not relevant to them. In other embodiments, however, the method comprises transmitting this auxiliary information not only to the requesting participant, but also to one or more of the other participants.

In a further embodiment the method comprises:
- registering a peripheral device of a participant to the video- and/or audio-conferencing system;
- transmitting the at least one retrieved auxiliary information portion to the registered peripheral device.

Registration of the participant makes it easier for the video- and/or audio conferencing system to identify which participant has requested which auxiliary information, so that it may determine to send each participant suitable for only that participant.

Preferably the time lapse between the receipt of specific items in the audio or video data and the transmitting auxiliary information about the items is relatively short, for instance 10 seconds or less, so that the participant (once a request has been transmitted from the participant to the conferencing system) is provided at an early stage with relevant information.

As described above, the conferencing system comprises a mapping between tags and associated portions of auxiliary information. This mapping is generated in a preprocessing phase. The pre-processing phase of the method may comprise receiving at least one structured text document with tags and their associated auxiliary information portions. Such document may have been annotated by the person hosting the video-conference and may be loaded onto the conferencing system and stored on its storage medium. Alternatively or additionally the method may comprise:
- receiving auxiliary information by the video- and/or audio-conferencing system;
- processing the received auxiliary information for obtaining one or more tags from the auxiliary information;
- mapping the obtained one or more auxiliary information tags to one or more associated portions of the auxiliary information.

Based on potentially useful auxiliary information received from various participants and/or from any other source, the method may involve an automatic generation of tags and an automatic mapping of the generated tags with the associated information portions. Examples of such other sources are previous presentations, in-company technical information, handbooks, encyclopedia, and online available knowledge sources. In embodiments of the invention. The collection of auxiliary information, the retrieval of the tags and the generating of a mapping between the tags and the relevant portions of auxiliary information may therefore be performed automatically and in principle do not need user intervention.

In an embodiment of the invention the processing of auxiliary information comprises applying text parsing and/or text summarization to the auxiliary information. These processing operations may result in tags and their associated text portions of auxiliary information (i.e. the portions of the texts that are related to the tags).

In an embodiment the parsing of auxiliary information comprises:
- obtaining text segments from the auxiliary information;
- scoring the potential for each text segment to be a tag;
- selecting one or more tags from the scored text segments;
- determining information portions representative of the meaning of the selected tags.

Scoring the potential of text segments to be tags may be based on a variety of text parsing techniques, for instance techniques based on text segment (term) - frequency and/or inverse document frequency.

In an embodiment of the invention the processing of auxiliary information comprises collating tags by comparing the tags with a pre-stored compendium to augment the tags with synonyms and root forms. The compendium may be any source, for instance a WordNet ® database. These synonyms and root forms may constitute further tags that are being mapped to the relevant information portions. In other embodiments the tags are roots forms only. Consequently, if synonyms or root forms are present in the conference data (i.e. in the video data and/or audio data), relevant items are recognized more easily so that the participant is presented with highly relevant auxiliary information.

In an embodiment of the invention the processing of auxiliary information comprises storing the tags and the mapping with auxiliary information portions in a tag index, preferably storing the tags in at least one tag index file on the video- and/or audio-conferencing system. In this way the knowledge is readily accessible for the actual and future conferences. The tag index file may comprise a lexigraphic table for easy access on lookup.

In the deployment phase, i.e. the phase after the pre-processing phase, the extracting of tags from the audio data being transmitted may comprise applying a speech recognition process to the audio data to obtain text segments from the audio data, and retrieving one or more tags from the recognized text segments. Similarly the extraction of tags from the video data being transmitted may comprise applying a text recognition process to the video data to obtain text segments from the video data, and retrieving one or more tags from the recognized text segments.

The method may comprise recognizing text segments from the audio data and retrieving tags from the recognized text segments. Herein text segments may be any of a word, word root and a combination of words.

In embodiments of the invention the extraction of tags, more specifically the speech recognition and retrieval of tags, is performed during data transmittal of the video- and/or audio data to the participant. In other words, the extracting of tags may be performed on the fly. In other embodiments the extracting of tags are performed just before (or just after) the video/audio data are transmitted to the applicant. Preferably the method provides the tags to the participant at the same moment as or a few seconds after the actual video/data are generated and/or transmitted to the participant so that the user may be presented with the relevant auxiliary information without delay.

In embodiments of the invention the retrieving of tags from the recognized text segments from the video- and/or audio data comprises:
- comparing the recognized text segments from the processed audio and/or video data with the tags of the mapping;
- determining one or more tags corresponding to one or more of the recognized text segments;
- determining for each tag the associated auxiliary information portion or portions from the stored mapping.

In these embodiments only tags that in the preprocessing phase have been derived from the auxiliary information are retrieved from the recognized text segments of the conference data. In other embodiments tags are retrieved from the text segments of the conference data irrespective of the tags previously being derived in the preprocessing phase. The retrieved tags derived from the conference data are then compared to the tags derived from the auxiliary information. Only the conference data tags that correspond to the auxiliary information tags are then selected to be used collect the auxiliary information that is to be pushed to the participant.

In embodiments of the invention the method comprises:
- transmitting video data and/or audio data from the video- and/or audio-conferencing system to a first rendering device of a participant;
- transmitting auxiliary information from the video- and/or audio-conferencing system to a second rendering device of the participant.

The first rendering device may be the computer device employed by the user(s) to participate in the conference. The second rendering device may be part of a peripheral device, for instance a mobile telecommunications device such as a telephone, smart phone or tablet device. In these embodiments the auxiliary information and the video/audio data are presented on separate displays, one for the actual video and/or audio of the video-conference and one for the auxiliary information. For instance, in case of more than one user employing the first rendering device, different user may need different auxiliary information to be presented at different moments in time. By separating the data streams of the conference and the auxiliary information and forwarding the streams to separate display devices the auxiliary information may be customized to meet the needs of the specific user requesting the information. In other embodiments, however, both data streams are displayed on a single display device.

Once a user has requested auxiliary information through his peripheral device, the conference system starts selecting at least one of the tags extracted from the transmitted video data and/or audio data. The selecting may comprise determining the one or more tags extracted in a predefined time period before receipt of the request for auxiliary information. For instance, as soon as a request message has been received by the conference system, the system selects the tags that have been identified in the last n time frames (n is natural number ≥ 1), finds for this set of tags the associated auxiliary information portions and pushes these portions to the peripheral device.

In further embodiments the selection of tags extracted from the transmitted video and/or audio data is based on participant preference (i.e. preference of the participant device and/or preference(s) of one or more peripheral devices of different users). For instance, a user may indicate in the participant preference that there is a relatively low level of knowledge about the subject of the conference. In this case a relatively high amount of auxiliary information is pushed to the peripheral device of the user. In case more the user already has a high knowledge level about the subject of the conference, less auxiliary information is pushed to the peripheral device so as to reduce the distraction to the user.

According to another aspect of the invention a system for tag based access to auxiliary information in a video- and/or audio conference is provided, the system comprising:
- a storage unit configured to store auxiliary information, tags, and a mapping between the tags and associated portions of the auxiliary information;
- a first transmitter for transmitting video data and/or or audio data to one or more participants of the conference;
- a receiver for receiving a request for auxiliary information from one or more participants of the conference;
- an extractor for extracting tags from the video data and/or audio data;
- a retrieval unit for retrieving auxiliary information upon receipt of a request for auxiliary information by the receiver, the retrieval unit being configured to:
   - select at least one of the tags extracted from the transmitted video data and/or audio data;
   - retrieve at least one auxiliary information portion associated with the selected at least one tag;
- a second transmitter for transmitting the retrieved auxiliary information portions to the participant that has requested the auxiliary information.

In embodiments of the invention the extractor is configured to apply a speech recognition process to the audio data to obtain text segments from the audio data and to retrieve one or more tags from the recognized text segments and/or to apply a text recognition process to the video data to obtain text segments from the video data and to retrieve one or more tags from the recognized text segments.

In embodiments of the invention the retrieval unit is configured to compare the recognized text segments from the processed audio and/or video data with tags from the stored mapping, to determine one or more tags corresponding to one or more recognized text segments and to determine for each tag the associated auxiliary information portion or portions from the mapping stored on the storage medium.

In embodiments of the invention the first transmitter is configured to transmit the video- and/or audio data to a first rendering device of the participant and the second transmitter is configured to transmit the retrieved auxiliary information portions to a second rendering device of the participant.

In embodiments of the invention the first and second rendering devices are combined into one rendering device and/or the first and second transmitters are combined into one transmitter. In embodiments of the invention the second rendering device is a peripheral device, more preferably a mobile telecommunications device, such as a telephone, smart phone or tablet device.

In embodiments of the invention the retrieval unit is further configured to select at least one of the tags extracted from the transmitted video data and/or audio data by determining the one or more tags extracted in a prestored time period before receipt of the request for auxiliary information.

In embodiments of the invention the retrieval unit is configured to compare a selected tag with a mapping between the tags and associated portions of the auxiliary information and to determine the one or more auxiliary information portions corresponding to the selected tag.

In embodiments of the invention the system is configured to:
- rank the tags extracted from the video and/or audio data;
- transmit the ranked tags to the participant;
- receive from the participant a selection of the ranked tags;
- retrieve the auxiliary information portion or portions from the selected tags.

In embodiments of the invention the system is configured to select tags extracted from the transmitted video and/or audio data based on participant preference. The preference may be transmitted by the participant device and/or by the participant peripheral device(s) to the conference system. The preference preferably may have been stored in a pre-processing phase of the stem and/or is determined by the participant's behaviour (for instance, depending on the number of times a peripheral device has requested auxiliary information).

In embodiments of the invention the number of tags selected from the tags extracted video and/or audio data depends on the number and/or the frequency of received requests for auxiliary information.

In embodiments of the invention the system comprises a pre-processing unit to perform the pre-processing as described herein. The pre-processing unit may be separate from the conference system or part of a monolithic architecture. The pre-processing unit may be configured to receive auxiliary information, process the received auxiliary information for obtaining one or more tags from the auxiliary information, mapping the obtained one or more auxiliary information tags to one or more associated portions of the auxiliary information and storing the auxiliary information, the tags, and the mapping between the tags and associated portions of the auxiliary information on the storage medium.

In embodiments of the invention the pre-processing unit is configured to:
- apply text parsing and/or text summarization to the auxiliary information to obtain tags and their associated text portions of auxiliary information; and/or
- collate tags by comparing the tags with a pre-stored compendium to augment the tags with synonyms and root forms; and/or
- store the tags and the mapping with auxiliary information portions on the storage medium, preferably in a tag index or in at least one tag index file.

According to another aspect of the invention an assembly of the system as defined herein and one or more participants connected or connectable to the system through one or more telecommunication networks.

According to another aspect of the invention a computer program product is provided, wherein the product comprises code for performing the method defined herein, when run on an electronic device, such as a computer.

Further advantages, features and details of the present invention will be elucidated on the basis of the following description of some embodiments thereof. Reference is made in the following description to the figures, in which:
Figure 1 shows a schematic overview of a first embodiment of system according to an embodiment of the present invention;
Figure 2 shows a schematic overview of a second embodiment of system according to an embodiment of the present invention;
Figures 3-5 show a diagram of method steps according to an embodiment of the invention, wherein figure 3 represents the pre-processing phase and figured 4 and 5 the deployment phase.

### Description of embodiments

Before the present invention is described in greater detail, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Unless defined otherwise, all technical and scientific terms used herein have the same meaning as commonly understood by one of ordinary skill in the art to which this invention belongs. Still, certain elements are defined below for the sake of clarity and ease of reference. Furthermore, the terms "system" and "computer-based system" refer to the hardware means, software means, and data storage means (e.g., a memory) used to practice aspects of the present invention. The minimum hardware of the computer-based systems of the present invention includes a central processing unit (CPU), input means, output means, and data storage means (e.g., a memory). A skilled artisan can readily appreciate that many computer-based systems are available which are suitable for use in the present invention.

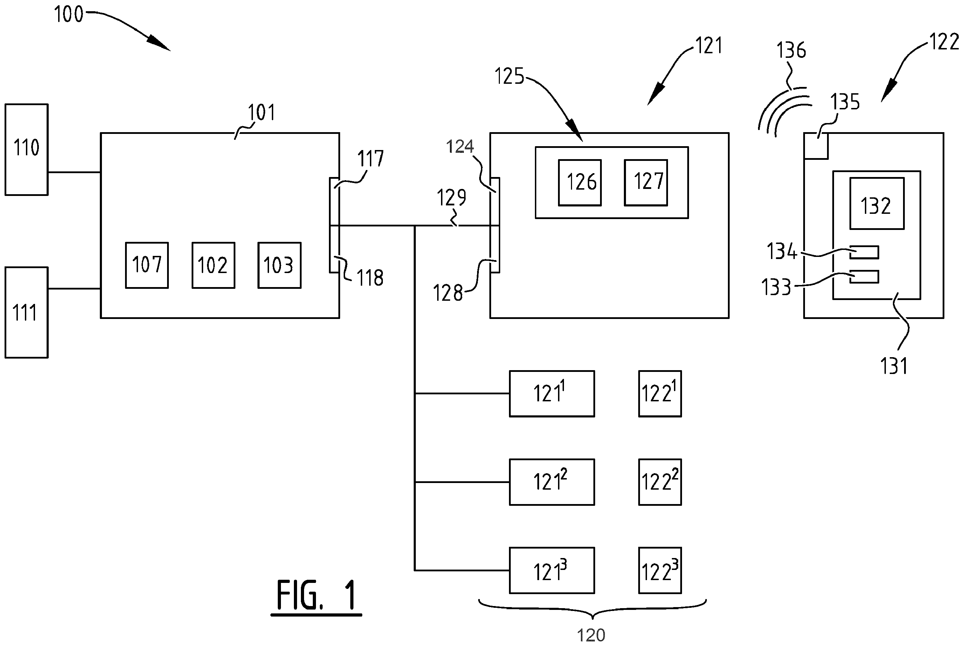

With reference to figure 1, an exemplary system 100 for implementing the various aspects of the invention is shown. The video- and data conferencing system 100 (herein also referred to as the conferencing system) includes a conventional computer 101, including a processing unit 102, a system memory 103, and a system bus 104 that couples various system components, including the system memory, to the processing unit 102. The processing unit 102 may be any commercially available or proprietary processor. In addition, the processing unit may be implemented as a multiprocessor including a plurality of processors. The system memory 103 may include read only memory (ROM) and random access memory (RAM). The system may comprise storage facilities 107, for instance one or more storage media such as hard discs, or at least connected to storage facilities, for instance online storage facilities. The operator can enter commands and information into the computer 101 through one or more user input devices, including, but not limited to, a keyboard 110 , a pointing device (e.g., a mouse 111), a touch screen, and a voice recognition system.

It is to be appreciated that the computer 101 can operate in a networked environment using logical connections to one or more participants 120-120³ of the conference. Each participant may comprise a remote computer. The participant 120 may be a workstation, a server computer, a router, a peer device or other common network node, and typically includes many or all of the elements described relative to the computer 101. The system may be connected to or include one or more communication networks 129, such as a local area network (LAN), a wide area network (WAN), and a telephone network, for instance a digital cellular network. In embodiments of the invention the system is connected to the internet. The system 100 comprises a transmitter 117 for transmitting video data and audio data over the communication networks 129 to the participants 120-120³ of the conference. The system also comprises a receiver 118 for receiving data, for instance an auxiliary request, from the participants.

In embodiments of the invention each participant 120 comprises a participant device 121-121³ and an peripheral device 122-122³. The peripheral device may be the mobile device 130-130³ of the user of the participant device, for instance a mobile telecommunication device such as a (smart) phone, PDA or a tablet. The participant device 121 comprises a receiver 124 for receiving data from the network 129 and a first rendering device 125 for rendering the video data and/or the audio data. Optionally the participant device 121 has a transmitter 128 as well. The rendering device may comprise a display 126 for displaying the video data and a loud speaker 127 for playing the audio data.

The respective mobile devices 130 comprise a transceiver 135 for receiving data from the network 136 or transmitting data over the network 136 (wherein the network 136 may be a wireless network, for instance a Wifi- network or a telephone network, or may be the network 129 between the participant device 121 and the system 100. A mobile device comprises a transceiver 124 for receiving data from the network 136, for instance the auxiliary information, and for sending data, for instance an auxiliary information request, over the network 136. The mobile device further comprises a second rendering device 131 for rendering the auxiliary information. The rendering device may comprise a display 132 for displaying the auxiliary information and a loudspeaker 133 for proving sound associated with the auxiliary information. The mobile device 130 comprises input means 134, for instance a key or a number of keys, to operate the device and to cause the device to send an auxiliary information request signal to the conference system 100.

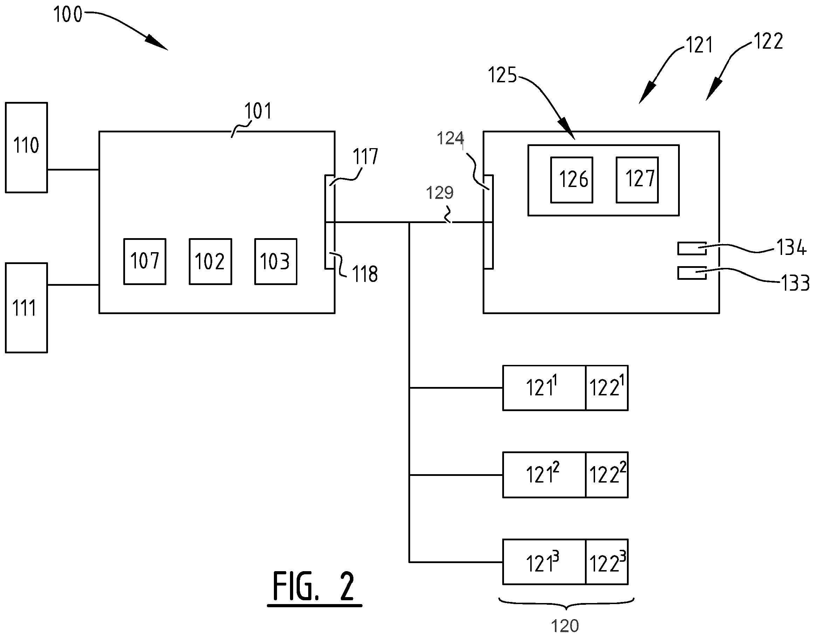

Figure 2 shows an embodiment of the present invention wherein the peripheral device 122 and the mobile device 130 of at least one of the users have been combined into participant device. The combined device may have one display only to render both the audio/video data and the auxiliary information on the same display and one set of transmitters/receivers or one transceiver to provide for data communication (both video/audio data and auxiliary information) between the conference system 100 and the participant device 121.

In a preprocessing phase, before setting up a conference between the conference system 100 and the participants 120, auxiliary information is loaded into the system 100 and stored on the storage 107. For instance, potential auxiliary information may be uploaded and stored by the various participants of the conference or may be stored by the presenter of the conference. Alternatively or additionally potential useful auxiliary information may be derived from in-company and/or external technical knowledge sources, for instance handbooks, previous presentations, reports, etc. In embodiments of the invention the auxiliary information is made available in structured text documents. The structured text documents contain text that provides auxiliary information about certain technical or non-technical items. A number of tags has been coupled or associated to the items. Each tag may be associated with one or more portions of the auxiliary information.

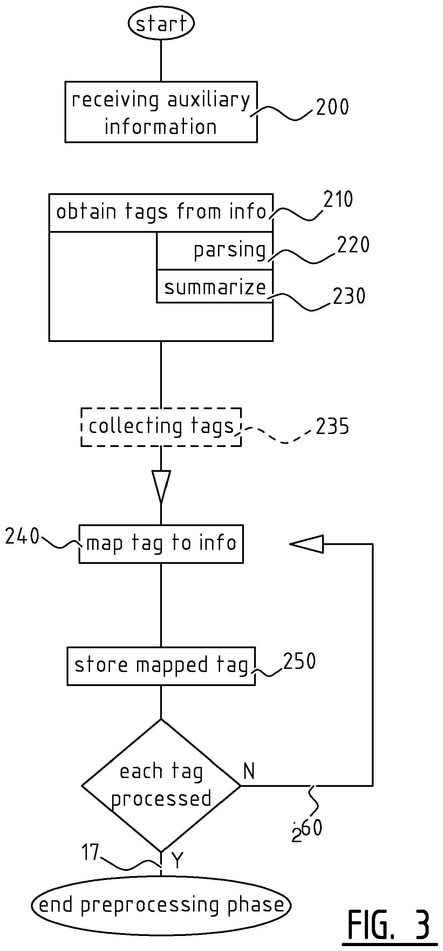

Additionally or alternatively, the auxiliary information may be available in unstructured form. Referring to figure 3, an embodiment is shown wherein the method comprises receiving (200) auxiliary information in the conference system 100 and processing the received auxiliary information for obtaining (210) a number of tags from the auxiliary information. Then a tag is mapped (240) with one or more suitable portions of the auxiliary information. The mapping is stored (250) on the storage facility 107 of the conference system 100. When not all tags have been processed, the mapping operation is repeated (260) for all the tags retrieved from the auxiliary information. When all tags have been processed and stored (270) on the storage facility 107 of the conference system 100, the conference system 100 is ready for the deployment phase wherein a conference may be organized. The mapping may be stored as a mapping index, for instance, relating each tag to one or more suitable portions (for instance, explanatory pieces of text) of auxiliary information.

In embodiments wherein the auxiliary information comprises text, optionally a combination of text and images or videos (with or without audio components), the text part of the auxiliary information may be processed to obtain an number of tags. Processing the text part of the auxiliary information may comprise applying text parsing (220) and/or text summarization (230). Text parsing results the auxiliary information text to be divided in individual text segments. In a further step a score is determined for the potential for the text segments to be tags, based on metrics such as TF (term-frequency) or IDF (inverse document frequency). The highest scoring text segments can then be annotated by associating tags based on their first usage. One of the possible heuristics is that (technical) terms are explained the first time they are used. Numerous alternative methods obtaining tags and associating the obtained tags with portions of the auxiliary information are conceivable as well and are all well within reach of the skilled person.

In further embodiments of the processing involves collating (235) tags by comparing the tags with a pre-stored compendium to augment the tags with synonyms and root forms in order to increase the reliability of the processing operation.

In the deployment phase the conference starts with the participant 120 to register (300) to the conference system 201. In embodiments wherein participants 120 are comprised of a separate participant device 121 and a peripheral device 122, the method comprises registering (310) the participant device and registering (320) the peripheral device of the participant are registered to the video- and/or audio-conferencing system. This enables to system 100 to send the audio/video data to the first display of the participant device 121 and the auxiliary information to a separate (second) display device of the peripheral device 122.

As soon as the conference has started, video data and audio data are being transmitted (330) from the conferencing system 100 to the participant devices 121 of the participants 120. During the transmission of the data, the conference system processes the video/audio data in order to extract (340) a number of tags. The tags may be extracted from the video data by applying a text recognition process (350) to the video data to obtain text segments and by retrieving (360) one or more tags from the recognized text segments. Similarly, during transmission of the audio data tags may be extracted from the audio data by applying speech recognition process to the audio data to obtain text segments from the audio data and by retrieving one or more tags from the recognized text segments.

In embodiments of the invention, retrieving of tags from the recognized text segments comprises comparing the recognized text segments, from the processed audio and/or video data, with the tags from the mapping previously stored on the storage facility 107 of the conference system 100 and then determining one or more tags corresponding to one or more of the recognized text segments.

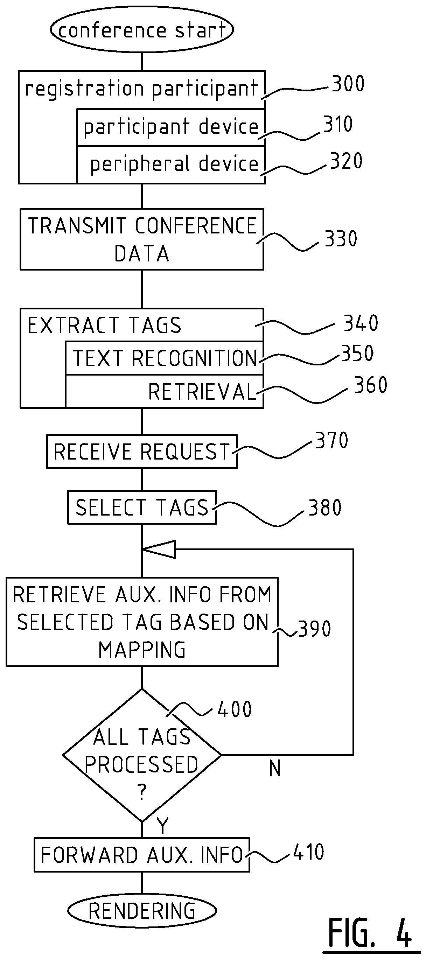

Referring to figure 4, when a user of a participant device 121 listening to the conference is in need of a further explanation about the content of the conference (i.e. the video data and/or the audio data), he may press a key (134) on the keyboard of the peripheral device 122. This causes the peripheral device 122 to generate a request for auxiliary information and transmit the request via the network 136 to the conference system 100. After having received (370) the request from the peripheral device, the conference system 100 determines which tags need to be selected (380) to provide the requesting participant 120 with relevant information. One option would be to determine the one or more tags extracted in a predefined time period before receipt of the request for auxiliary information. Any time period may be defined. Typically the conference system takes a time period over several seconds, for instance 5 to 10 seconds. The system then selects from the video data and/or audio data the tags that have been retrieved in this time period.

In embodiments of the invention the method also comprises transmitting the tags to the participant. The participant then chooses one or more tags from the tags presented and provides a selection signal to the conference system. The conference system then selects only the tags that have been chosen by the participant. In a further embodiment the extracted tags to be transmitted to the participant are ranked in order to assist the participant to choose one or more suitable tags. These embodiments are examples of a selection that is based on participant preference. There are also other examples of selection based on participant's preferences.

In an embodiment the number of tags selected (380) from the tags extracted from video and/or audio data depends on the number of requests for auxiliary information received by the conference system by a specific participant and/or on the number of requests per unit of time (frequency). For instance, in case of a high number or high frequency of received requests for auxiliary information, more auxiliary information is transmitted to participant, while in case of a low number/frequency the system transmits less auxiliary information to the participant. Similarly, the user may determine whether the information need is low, medium or high. The level of information needed by a user may be provided as participant preference to the conference system. The conference system may be configured to provide more or less information or different types of information depending on the information need of the user (low, medium or high).

Auxiliary information portions corresponding to a selected tag are retrieved (390) from the storage 107 based on the mapping between this tag and one or more auxiliary information portions determined in the preprocessing phase. The system checks (410) whether all tags have been processed. When not all tags have been processed, the retrieval (390) of auxiliary information is repeated. When all tags have been processed, the auxiliary information received by the participant, for instance the peripheral device of the participant, is forwarded (pushed) (410) by the transmitter 117 to the transceiver 135 of the peripheral device 121 of the participant that has transmitted the request to the conference system. The auxiliary information pushed to the participant is rendered on the rendering device 131 of the participant 120, i.e. text, images and/or video's are displayed on the display device 132 and sound is played on the loudspeaker 133.

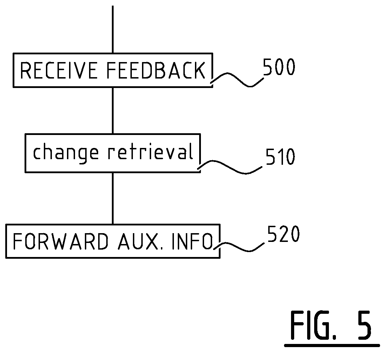

In figure 5 a further embodiment is presented. In this embodiment the participant provides feedback to the conference system based on the content of the previously received auxiliary information. The method comprises receiving (500) feedback data from the peripheral device in reaction to the auxiliary information pushed to the peripheral device. The conference system may determine to change (510) the retrieval of auxiliary information. For instance, the conference system may determine to stop retrieving information and pushing the information to the peripheral device when the user has given the feedback that the previously provided auxiliary information was not useful. The conference system may also decide to forward (push) (520) additional auxiliary information and/or more detailed auxiliary information to the peripheral device, based on the user preferences expressed in the feedback.

Since in this embodiment the auxiliary information is sent only to the participant that actually requested information, a user is presented only with auxiliary information that is relevant to him or her.

In the above embodiment the auxiliary information and the video data and audio data of the conference are displayed on separate displays, one for the actual video and/or audio of the video-conference and one for the auxiliary information. In other embodiments the auxiliary information and the video data and audio data of the conference are displayed on one single display (i.e. the first and second rendering device 125,131 are combined).

It is to be understood that this invention is not limited to particular aspects described, and, as such, may vary. It is also to be understood that the terminology used herein is for the purpose of describing particular aspects only, and is not intended to be limiting, since the scope of the present invention will be limited only by the appended claims.

As will be apparent to those of skill in the art upon reading this disclosure, each of the individual embodiments described and illustrated herein has discrete components and features which may be readily separated from or combined with the features of any of the other several embodiments without departing from the scope of the present invention. Any recited method can be carried out in the order of events recited or in any other order which is logically possible.

## Claims

1. Method for tag based access to auxiliary information during a video- and/or audio-conference, the video- and/or audio conference involving a video- and/or audio conferencing system (100) comprising a mapping between tags and associated portions of auxiliary information, the method comprising:
- transmitting (330) video data and/or audio data from the video- and/or audio-conferencing system to a first rendering device (125) of a participant of the video-conference;
- having the conferencing system extract (340) tags from the video data and/or audio data being transmitted;
- upon receiving (370) by the conferencing system of a request for auxiliary information from the participant, causing the conferencing system to:
- select (380) at least one of the tags extracted from the transmitted video data and/or audio data;
- retrieve (390) at least one auxiliary information portion associated with the selected at least one tag;
- transmit (410) the at least one retrieved auxiliary information portion to a second rendering device (131) of the participant that has requested the auxiliary information.

2. Method as claimed in claim 1, wherein the first and second rendering devices are a single rendering device.

3. Method as claimed in claim 1, wherein the first and second rendering devices are separate rendering devices.

4. Method as claimed in claim 3, wherein the first rendering device is a computer device configured to render the audio and/or video data of the conference and the second rendering device is a peripheral device configured to render the auxiliary information, preferably a mobile telecommunications device such as a telephone, smart phone or tablet device.

5. Method as claimed in any of the preceding claims, wherein a tag is a text segment, preferably a text segment extracted from the video data and/or audio data.

6. Method as claimed in claim 1, wherein extracting tags from the audio data being transmitted comprises:
- applying a speech recognition process to the audio data to obtain text segments from the audio data;
- retrieving one or more tags from the recognized text segments;
and/or wherein extracting tags from the video data being transmitted comprises:
- applying a text recognition process to the video data to obtain text segments from the video data;
- retrieving one or more tags from the recognized text segments.

7. Method as claimed in claim 6, wherein the mapping between tags and associated auxiliary information portions has been previously stored on a storage unit (107) of the conference system (100) and wherein the retrieving of tags from the recognized text segments comprises:
- comparing the recognized text segments from the processed audio and/or video data with the tags of the mapping;
- determining one or more tags corresponding to one or more of the recognized text segments;
- determining for each tag the associated auxiliary information portion or portions from the stored mapping.

8. Method as claimed in any of the preceding claims, wherein selecting at least one of the tags extracted from the transmitted video data and/or audio data comprises:
- determining the one or more tags extracted in a predefined time period before receipt of the request for auxiliary information;
or the method comprising:
- ranking the tags extracted from the video and/or audio data;
- transmitting the ranked tags to the participant;
- receiving from the participant a selection of the ranked tags;
- retrieving the auxiliary information portion or portions from the selected tags;
or the method comprising
- generating an auxiliary information request by the participant;
- transmitting the auxiliary information request to the video- and/or audio-conferencing system; or
- showing auxiliary information on the first or the second rendering device.

9. Method as claimed in any of the preceding claims, wherein the selection of tags extracted from the transmitted video and/or audio data is based on participant preference; or wherein the number of tags selected from the tags extracted from video and/or audio data depends on the number or the frequency of received requests for auxiliary information.

10. Method as claimed in any of the preceding claims, wherein, in a pre-processing phase, the method comprises:
- receiving at least one structured text document with tags and their associated auxiliary information portions.

11. Method as claimed in any of the claims 1 - 9, wherein, in a pre-processing phase, the method comprises:
- receiving auxiliary information by the video- and/or audio-conferencing system;
- processing the received auxiliary information for obtaining one or more tags from the auxiliary information;
- mapping the obtained one or more auxiliary information tags to one or more associated portions of the auxiliary information.

12. Method as claimed in claim 11, wherein processing the auxiliary information comprises at least one of:
- applying at least one of text parsing and text summarization to the auxiliary information to obtain tags and their associated text portions of auxiliary information;
- collating tags by comparing the tags with a pre-stored compendium to augment the tags with synonyms and root forms;
- storing the tags and the mapping with auxiliary information portions in a tag index, preferably storing the tags in at least one tag index file on the video- and/or audio-conferencing system.

13. System for tag based access to auxiliary information in a video- and/or audio conference, the system comprising:
- a storage unit (107) configured to store auxiliary information, tags, and a mapping between the tags and associated portions of the auxiliary information;
- a first transmitter (117) for transmitting video data and/or or audio data to a first rendering device (125) of one or more participants of the conference;
- a receiver (118) for receiving a request for auxiliary information from one or more participants of the conference;
- an extractor for extracting tags from the video data and/or audio data;
- a retrieval unit for retrieving auxiliary information upon receipt of the request for auxiliary information by the receiver, the retrieval unit being configured to:
- select at least one of the tags extracted from the transmitted video data and/or audio data;
- retrieve at least one auxiliary information portion associated with the selected at least one tag;
- a second transmitter for transmitting the retrieved auxiliary information portions to a second rendering device (131) of the participant that has requested the auxiliary information.

14. System as claimed in claim 13, wherein the extractor is configured to at least one of:
- applying a speech recognition process to the audio data to obtain text segments from the audio data and to retrieve one or more tags from the recognized text segments
- applying a text recognition process to the video data to obtain text segments from the video data and to retrieve one or more tags from the recognized text segments; and preferably also wherein the retrieval unit is configured to compare the recognized text segments from the processed audio and/or video data with tags from the stored mapping, to determine one or more tags corresponding to one or more recognized text segments and to determine for each tag the associated auxiliary information portion or portions from the mapping stored on the storage unit.

15. System as claimed in any of the claims 13-14, wherein the first and second rendering devices are a single rendering device.

16. System as claimed in any of the claims 13-14, wherein the first and second rendering devices are separate rendering devices, wherein the first rendering device preferably is a computer device configured to render the audio and/or video data of the conference and the second rendering device preferably is a peripheral device configured to render the auxiliary information, preferably a mobile telecommunications device such as a telephone, smart phone or tablet device.

17. System as claimed in any of the claims 13-16, wherein the retrieval unit is further configured to select at least one of the tags extracted from the transmitted video data and/or audio data by determining the one or more tags extracted in a prestored time period before receipt of the request for auxiliary information; and preferably wherein the retrieval unit is configured to compare a selected tag with a mapping between the tags and associated portions of the auxiliary information and to determine the one or more auxiliary information portions corresponding to the selected tag.

18. System as claimed in any of the claims 13-17, wherein the system is configured to select tags extracted from the transmitted video and/or audio data based on participant preference, wherein the participant preference preferably is prestored on the system or is determined by the participant's behavior and preferably wherein the number of tags selected from the tags extracted from the video and/or audio data depends on the number or the frequency of received requests for auxiliary information.

19. System as claimed in any of the claims 13-18, the system comprising a preprocessing unit configured to receive auxiliary information, process the received auxiliary information for obtaining one or more tags from the auxiliary information, mapping the obtained one or more auxiliary information tags to one or more associated portions of the auxiliary information and storing the auxiliary information, the tags, and the mapping between the tags and associated portions of the auxiliary information on the storage unit,
the preprocessing unit preferably being configured to perform at least one of the following:
- apply text parsing and/or text summarization to the auxiliary information to obtain tags and their associated text portions of auxiliary information;
- collate tags by comparing the tags with a pre-stored compendium to augment the tags with synonyms and root forms;
- store the tags and the mapping with auxiliary information portions on the storage unit, preferably in a tag index or in at least one tag index file.

20. A computer program product comprising code for performing the method according to any of the claims 1- 12, when run on an electronic device, such as a computer.

## Patentansprüche

1. Verfahren zum tagbasierten Zugriff auf Zusatzinformationen während einer Video- und/oder Audiokonferenz, wobei die Video- und/oder Audiokonferenz ein Video- und/oder Audiokonferenzsystem (100) einbezieht, das eine Zuordnung zwischen Tags und zugehörigen Abschnitten von Zusatzinformationen umfasst, wobei das Verfahren umfasst:
- Übertragen (330) von Videodaten und/oder Audiodaten von dem Video- und/oder Audiokonferenzsystem an eine erste Wiedergabevorrichtung (125) eines Teilnehmers der Videokonferenz;
- das Konferenzsystem Tags aus den übertragenen Videodaten und/oder Audiodaten extrahieren (340) lassen;
- bei Empfang (370) einer Anforderung von Zusatzinformation von dem Teilnehmer, Veranlassen des Konferenzsystems zum:
- Auswählen (380) mindestens eines der aus den übertragenen Videodaten und/oder Audiodaten extrahierten Tags;
- Abrufen (390) mindestens eines Zusatzinformationsabschnitts, der dem ausgewählten mindestens einen Tag zugehörig ist;
- Übertragen (410) des mindestens einen abgerufenen Zusatzinformationsabschnitts an eine zweite Wiedergabevorrichtung (131) des Teilnehmers, der die Zusatzinformationen angefordert hat.

2. Verfahren nach Anspruch 1, wobei die erste und die zweite Wiedergabevorrichtung eine einzige Wiedergabevorrichtung sind.

3. Verfahren nach Anspruch 1, wobei die erste und die zweite Wiedergabevorrichtung getrennte Wiedergabevorrichtungen sind.

4. Verfahren nach Anspruch 3, wobei die erste Wiedergabevorrichtung ein Computervorrichtung ist, die zum Rendern der Audio- und/oder Videodaten der Konferenz konfiguriert ist, und die zweite Wiedergabevorrichtung ein Peripherievorrichtung ist, die zum Rendern der Zusatzinformationen konfiguriert ist, vorzugsweise eine mobile Telekommunikationsvorrichtung, wie etwa eine Telefon-, Smartphone-, oder Tabletvorrichtung.

5. Verfahren nach einem der vorhergehenden Ansprüche, wobei ein Tag ein Textsegment ist, vorzugsweise ein Textsegment, das aus den Videodaten und/oder Audiodaten extrahiert wurde.

6. Verfahren nach Anspruch 1, wobei das Extrahieren von Tags aus den übertragenen Audiodaten umfasst:
- Anwenden eines Spracherkennungsprozesses auf die Audiodaten, um Textsegmente aus den Audiodaten zu erhalten;
- Abrufen eines oder mehrerer Tags aus den erkannten Textsegmenten;
und/oder wobei das Extrahieren von Tags aus den übertragenen Videodaten umfasst:
- Anwenden eines Texterkennungsprozesses auf die Videodaten, um Textsegmente aus den Videodaten zu erhalten;
- Abrufen eines oder mehrerer Tags aus den erkannten Textsegmenten.

7. Verfahren nach Anspruch 6, wobei die Zuordnung zwischen Tags und zugehörigen Zusatzinformationsabschnitten zuvor in einer Speichereinheit (107) des Konferenzsystems (100) gespeichert wurde und wobei das Abrufen von Tags aus den erkannten Textsegmenten umfasst:
- Vergleichen der erkannten Textsegmente aus den verarbeiteten Audio- und/oder Videodaten mit den Tags der Zuordnung;
- Bestimmen eines oder mehrerer Tags, die einem oder mehreren der erkannten Textsegmente entsprechen;
- Bestimmen, für jedes Tag, des oder der zugehörigen Zusatzinformationsabschnitte aus der gespeicherten Zuordnung.

8. Verfahren nach einem der vorhergehenden Ansprüche, wobei das Auswählen von mindestens einem der aus den übertragenen Videodaten und/oder Audiodaten extrahierten Tags umfasst:
- Bestimmen des einen oder der mehreren Tags, die in einer vordefinierten Zeitperiode vor dem Empfang der Anforderung von Zusatzinformationen extrahiert wurden;
oder das Verfahren umfasst:
- Einstufen der aus den Video- und/oder Audiodaten extrahierten Tags;
- Übertragen der eingestuften Tags an den Teilnehmer;
- Empfangen einer Auswahl der eingestuften Tags von dem Teilnehmer;
- Abrufen des oder der Zusatzinformationsabschnitte aus den ausgewählten Tags;
oder das Verfahren umfasst
- Erzeugen einer Zusatzinformationsanforderung durch den Teilnehmer;
- Übertragen der Zusatzinformationsanforderung an das Video- und/oder Audiokonferenzsystem; oder
- Anzeigen von Zusatzinformationen auf der ersten oder der zweiten Wiedergabevorrichtung.

9. Verfahren nach einem der vorhergehenden Ansprüche, wobei die Auswahl von Tags, die aus den übertragenen Video- und/oder Audiodaten extrahiert werden, auf der Präferenz der Teilnehmer basiert; oder wobei die Anzahl von Tags, die aus den aus Video- und/oder Audiodaten extrahierten Tags ausgewählt werden, von der Anzahl oder der Häufigkeit empfangener Anforderungen nach Zusatzinformationen abhängt.

10. Verfahren nach einem der vorhergehenden Ansprüche, wobei das Verfahren in einer Vorverarbeitungsphase umfasst:
- Empfangen mindestens eines strukturierten Textdokuments mit Tags und ihren zugehörigen Zusatzinformationsbereichen.

11. Verfahren nach einem der Ansprüche 1 bis 9, wobei das Verfahren in einer Vorverarbeitungsphase umfasst:
- Empfangen von Zusatzinformationen durch das Video- und/oder Audiokonferenzsystem;
- Verarbeiten der empfangenen Zusatzinformationen zum Erhalten eines oder mehrerer Tags aus den Zusatzinformationen;
- Zuordnen des erhaltenen einen oder mehreren Zusatzinformationstags zu einem oder mehreren zugehörigen Abschnitten der Zusatzinformationen.

12. Verfahren nach Anspruch 11, wobei das Verarbeiten der Zusatzinformationen mindestens eines von umfasst:
- Anwenden mindestens eines von einer Textanalyse und/oder Textzusammenfassung auf die Zusatzinformationen, um Tags und ihre zugehörigen Textabschnitte von Zusatzinformationen zu erhalten;
- Sortieren von Tags durch Vergleichen der Tags mit einem im Voraus gespeicherten Kompendium, um die Tags durch Synonyme und Stammformen zu ergänzen;
- Speichern der Tags und der Zuordnung zu Zusatzinformationsabschnitten in einem Tag-Index, vorzugsweise Speichern der Tags in mindestens einer Tag-Indexdatei in dem Video- und/oder Audiokonferenzsystem.

13. System zum tagbasierten Zugriff auf Zusatzinformationen in einer Video- und/oder Audiokonferenz, wobei das System umfasst:
- eine Speichereinheit (107), die konfiguriert ist, Zusatzinformationen, Tags, und eine Zuordnung zwischen den Tags und zugehörigen Abschnitten der Zusatzinformationen zu speichern;
- einen ersten Sender (117) zum Übertragen von Videodaten und/oder Audiodaten an eine erste Wiedergabevorrichtung (125) eines oder mehrerer Konferenzteilnehmer;
- einen Empfänger (118) zum Empfangen einer Anforderung von Zusatzinformationen von einem oder mehreren Konferenzteilnehmern;
- einen Extraktor zum Extrahieren von Tags aus den Videodaten und/oder Audiodaten;
- eine Abrufeinheit zum Abrufen von Zusatzinformationen nach Empfang der Anforderung von Zusatzinformationen durch den Empfänger, wobei die Abrufeinheit konfiguriert ist zum:
- Auswählen mindestens eines der aus den übertragenen Videodaten und/oder Audiodaten extrahierten Tags;
- Abrufen mindestens eines Zusatzinformationsabschnitts, der dem ausgewählten mindestens einen Tag zugehörig ist;
- einen zweiten Sender zum Übertragen der abgerufenen Zusatzinformationsabschnitte an eine zweite Wiedergabevorrichtung (131) des Teilnehmers, der die Zusatzinformation angefordert hat.

14. System nach Anspruch 13, wobei der Extraktor konfiguriert ist zum mindestens einen von:
- Anwenden eines Spracherkennungsprozesses auf die Audiodaten, um Textsegmente aus den Audiodaten zu erhalten und eines oder mehrere Tags aus den erkannten Textsegmenten abzurufen,
- Anwenden eines Texterkennungsprozesses auf die Videodaten, um Textsegmente aus den Videodaten zu erhalten und eines oder mehrere Tags aus den erkannten Textsegmenten abzurufen; und wobei die Abrufeinheit vorzugsweise auch konfiguriert ist, die erkannten Textsegmente aus den verarbeiteten Audio- und/oder Videodaten mit Tags aus der gespeicherten Zuordnung zu vergleichen, eine oder mehrere Tags zu bestimmen, die einem oder mehreren erkannten Textsegmenten entsprechen, und für jedes Tag den oder die zugehörigen Zusatzinformationsabschnitte aus der in der Speichereinheit gespeicherten Zuordnung zu bestimmen.

15. System nach einem der Ansprüche 13 bis 14, wobei die erste und die zweite Wiedergabevorrichtung eine einzige Wiedergabevorrichtung sind.

16. System nach einem der Ansprüche 13 bis 14, wobei die erste und die zweite Wiedergabevorrichtung getrennte Wiedergabevorrichtungen sind, wobei die erste Wiedergabevorrichtung vorzugsweise eine Computervorrichtung ist, die zum Rendern der Audio- und/oder Videodaten der Konferenz konfiguriert ist, und die zweite Wiedergabevorrichtung vorzugsweise ein Peripherievorrichtung ist, die zum Rendern der Zusatzinformationen konfiguriert ist, vorzugsweise eine mobile Telekommunikationsvorrichtung, wie etwa eine Telefon-, Smartphone, oder Tabletvorrichtung.

17. System nach einem der Ansprüche 13 bis 16, wobei die Abrufeinheit ferner konfiguriert ist, mindestens eines der aus den übertragenen Videodaten und/oder Audiodaten extrahierten Tags auszuwählen durch Bestimmen des einen oder der mehreren Tags, die in einer vorgespeicherte Zeitperiode vor dem Empfang der Anforderung von Zusatzinformationen extrahiert wurden; und wobei die Wiedergewinnungseinheit vorzugsweise konfiguriert ist, ein ausgewähltes Tag mit einer Zuordnung zwischen den Tags und zugehörigen Abschnitten der Zusatzinformationen zu vergleichen und den einen oder die mehreren Zusatzinformationsabschnitte, die dem ausgewählten Tag entsprechen, zu bestimmen.

18. System nach einem der Ansprüche 13 bis 17, wobei das System konfiguriert ist, aus den übertragenen Video- und/oder Audiodaten extrahierte Tags basierend auf der Teilnehmerpräferenz auszuwählen, wobei die Teilnehmerpräferenz vorzugsweise im System vorgespeichert ist oder durch das Verhalten des Teilnehmers bestimmt wird, und wobei vorzugsweise die Anzahl der Tags, die aus den Tags ausgewählt werden, die aus den Video- und/oder Audiodaten extrahiert werden, von der Anzahl oder der Häufigkeit empfangener Anforderungen nach Zusatzinformationen abhängt.

19. System nach einem der Ansprüche 13 bis 18, wobei das System eine Vorverarbeitungseinheit umfasst, die konfiguriert ist, Zusatzinformationen zu empfangen, die empfangenen Zusatzinformationen zu verarbeiten, um eines oder mehrere Tags aus den Zusatzinformationen zu erhalten, das eine oder die mehreren erhaltenen Zusatzinformationstags einem oder mehreren zugehörigen Abschnitten der Zusatzinformationen zuzuordnen, und die Zusatzinformationen, die Tags, und die Zuordnung zwischen den Tags und zugehörigen Abschnitten der Zusatzinformationen in der Speichereinheit zu speichern,
wobei die Vorverarbeitungseinheit vorzugsweise konfiguriert ist, mindestens eines des folgenden auszuführen:
- Anwenden einer Textanalyse und/oder Textzusammenfassung auf die Zusatzinformationen, um Tags und die zugehörigen Textabschnitte der Zusatzinformationen zu erhalten;
- Sortieren von Tags durch Vergleichen der Tags mit einem im Voraus gespeicherten Kompendium, um die Tags durch Synonyme und Stammformen zu ergänzen;
- Speichern der Tags und der Zuordnung zu Zusatzinformationsabschnitten in der Speichereinheit, vorzugsweise in einem Tag-Index oder in mindestens einer Tag-Indexdatei.

20. Computerprogrammprodukt, umfassend Code zum Durchführen des Verfahrens nach einem der Ansprüche 1 bis 12, wenn es auf einer elektronischen Vorrichtung, wie etwa einem Computer, ausgeführt wird.

## Revendications

1. Procédé pour accès à base d'étiquettes à des informations auxiliaires durant une vidéo- et/ou audio-conférence, la vidéo- et/ou audio-conférence impliquant un système de vidéo- et/ou d'audio-conférence (100), comprenant un mappage entre des étiquettes et des portions associées d'informations auxiliaires, le procédé comprenant les faits de :
- transmettre (330) des données vidéo et/ou des données audio du système de vidéo- et/ou d'audio-conférence à un premier dispositif de rendu (125) du participant de la vidéo-conférence ;
- faire en sorte que le système de conférence extraie (340) des étiquettes à partir des données vidéo et/ou données audio en train d'être transmises ;
- lorsque le système de conférence reçoit (370) une demande concernant des informations auxiliaires, à partir du participant, faire en sorte que le système de conférence :
- sélectionne (380) au moins une des étiquettes extraites des données vidéo et/ou données audio transmises ;
- récupère (390) au moins une portion d'informations auxiliaires associée à l'au moins une étiquette sélectionnée ;
- transmette (410) l'au moins une portion d'informations auxiliaires récupérée à un second dispositif de rendu (131) du participant qui a demandé les informations auxiliaires.

2. Procédé selon la revendication 1, dans lequel les premier et second dispositifs de rendu sont un seul dispositif de rendu.

3. Procédé selon la revendication 1, dans lequel les premier et second dispositifs de rendu sont des dispositifs de rendu séparés.

4. Procédé selon la revendication 3, dans lequel le premier dispositif de rendu est un dispositif d'ordinateur configuré pour rendre les données audio et/ou vidéo de la conférence et le second dispositif de rendu est un dispositif périphérique configuré pour rendre les informations auxiliaires, de préférence un dispositif de télécommunication mobile tel qu'un téléphone, téléphone intelligent ou dispositif tablette.

5. Procédé selon l'une quelconque des revendications précédentes, dans lequel une étiquette est un segment de texte, de préférence un segment de texte extrait des données vidéo et/ou données audio.

6. Procédé selon la revendication 1, dans lequel le fait d'extraire des étiquettes à partir des données audio en train d'être transmises comprend les faits de :
- appliquer un traitement de reconnaissance de voix sur les données audio pour obtenir des segments de texte à partir des données audio ;
- récupérer une ou plusieurs étiquettes à partir des segments de texte reconnus ;
et/ou dans lequel le fait d'extraire des étiquettes à partir des données vidéo en train d'être transmises comprend les faits de :
- appliquer un traitement de reconnaissance de texte sur les données vidéo pour obtenir des segments de texte à partir des données vidéo ;
- récupérer une ou de plusieurs étiquettes à partir des segments de texte reconnus.

7. Procédé selon la revendication 6, dans lequel le mappage entre des étiquettes et des portions associées d'informations auxiliaires a été stocké auparavant sur une unité de stockage (107) du système de conférence (100) et dans lequel le fait de récupérer des étiquettes à partir des segments de texte reconnus comprend les faits de :
- comparer des segments de texte reconnus à partir des données audio et/ou vidéo traitées aux étiquettes du mappage ;
- déterminer une ou plusieurs étiquettes correspondant à un ou plusieurs des segments de texte reconnus ;
- déterminer, pour chaque étiquette, la portion associée ou les portions associées d'informations auxiliaires à partir du mappage stocké.

8. Procédé selon l'une quelconque des revendications précédentes, dans lequel le fait de sélectionner au moins une des étiquettes extraites des données vidéo et/ou données audio transmises comprend le fait de :
- déterminer une ou plusieurs étiquettes extraites dans une période prédéfinie avant de recevoir la demande concernant des informations auxiliaires ;
ou le procédé comprenant les faits de :
- classer les étiquettes extraites des données vidéo et/ou audio ;
- transmettre les étiquettes classées au participant ;
- recevoir, à partir du participant, une sélection des étiquettes classées ;
- récupérer la portion ou les portions d'informations auxiliaires à partir des étiquettes sélectionnées ;
ou le procédé comprenant les faits de :
- générer une demande concernant des informations auxiliaires, par le participant ;
- transmettre la demande concernant des informations auxiliaires au système de vidéo- et/ou d'audio-conférence ; ou
- présenter des informations auxiliaires sur le premier ou le second dispositif de rendu.

9. Procédé selon l'une quelconque des revendications précédentes, dans lequel le fait de sélectionner des étiquettes extraites des données vidéo et/ou audio transmises est fondé sur la préférence du participant ; ou
dans lequel le nombre d'étiquettes sélectionnées à partir des étiquettes extraites de données vidéo et/ou audio dépend du nombre ou de la fréquence de demandes reçues concernant des informations auxiliaires.

10. Procédé selon l'une quelconque des revendications précédentes, dans lequel, dans une phase de pré-traitement, le procédé comprend le fait de :
- recevoir au moins un document de texte structuré avec des étiquettes et leurs portions associées d'informations auxiliaires.

11. Procédé selon l'une quelconque des revendications 1 à 9, dans lequel, dans une phase de pré-traitement, le procédé comprend les faits de :
- recevoir des informations auxiliaires, par le système de vidéo- et/ou d'audio-conférence ;
- traiter les informations auxiliaires reçues pour obtenir une ou plusieurs étiquettes à partir des informations auxiliaires ;
- mapper les une ou plusieurs étiquettes d'informations auxiliaires obtenues sur une ou plusieurs portions associées des informations auxiliaires.

12. Procédé selon la revendication 11, dans lequel le fait de traiter les informations auxiliaires comprend au moins un des faits de :
- appliquer au moins un d'une analyse de texte et d'une récapitulation de texte sur les informations auxiliaires pour obtenir des étiquettes et leurs portions de texte associées d'informations auxiliaires ;
- collationner des étiquettes en comparant des étiquettes à un compendium pré-stocké pour accroître les étiquettes avec des synonymes et des formes de racine ;
- stocker les étiquettes et le mappage avec des portions d'informations auxiliaires dans un index d'étiquettes, de préférence stocker les étiquettes dans au moins un fichier d'index d'étiquettes sur le système de vidéo- et/ou d'audio-conférence.

13. Système pour accès à base d'étiquettes à des informations auxiliaires dans une vidéo- et/ou audio-conférence, le système comprenant :
- une unité de stockage (107) configurée pour stocker des informations auxiliaires, des étiquettes, et un mappage entre les étiquettes et des portions associées des informations auxiliaires ;
- un premier transmetteur (117) pour transmettre des données vidéo et/ou des données audio à un premier dispositif de rendu (125) d'un ou de plusieurs participants de la conférence ;
- un récepteur (118) pour recevoir une demande, concernant des informations auxiliaires, à partir d'un ou de plusieurs participants de la conférence ;
- un extracteur pour extraire des étiquettes à partir des données vidéo et/ou données audio ;
- une unité de récupération pour récupérer des informations auxiliaires lorsque le récepteur reçoit la demande concernant des informations auxiliaires, l'unité de récupération étant configurée pour :
- sélectionner au moins une des étiquettes extraites des données vidéo et/ou données audio transmises ;
- récupérer au moins une portion d'informations auxiliaires associée à l'au moins une étiquette sélectionnée ;
- un second transmetteur pour transmettre les portions d'informations auxiliaires récupérées à un second dispositif de rendu (131) du participant qui a demandé les informations auxiliaires.

14. Système selon la revendication 13, dans lequel l'extracteur est configuré pour réaliser au moins une de :
- l'application d'un traitement de reconnaissance de voix sur les données audio pour obtenir des segments de texte à partir des données audio et pour récupérer une ou plusieurs étiquettes à partir des segments de texte reconnus
- l'application d'un traitement de reconnaissance textuelle sur les données vidéo pour obtenir des segments de texte à partir des données vidéo et pour récupérer une ou plusieurs étiquettes à partir des segments de texte reconnus ; et de préférence également dans lequel l'unité de récupération est configurée pour comparer les segments de texte reconnus des données audio et/ou vidéo traitées à des étiquettes du mappage stocké, pour déterminer une ou plusieurs étiquettes correspondant à un ou plusieurs segments de texte reconnus et pour déterminer, pour chaque étiquette, la portion associée ou les portions associées d'informations auxiliaires à partir du mappage stocké sur l'unité de stockage.

15. Système selon l'une quelconque des revendications 13 à 14, dans lequel les premier et second dispositifs de rendu sont un seul dispositif de rendu.

16. Système selon l'une quelconque des revendications 13 à 14, dans lequel les premier et second dispositifs de rendu sont des dispositifs de rendu séparés, dans lequel le premier dispositif de rendu de préférence est un dispositif ordinateur configuré pour rendre les données audio et/ou vidéo de la conférence et le second dispositif de rendu de préférence est un dispositif périphérique configuré pour rendre les informations auxiliaires, de préférence un dispositif de télécommunication mobile tel qu'un téléphone, téléphone intelligent ou dispositif tablette.

17. Système selon l'une quelconque des revendications 13 à 16, dans lequel l'unité de récupération est en outre configurée pour sélectionner au moins une des étiquettes extraites des données vidéo et/ou données audio transmises en déterminant une ou plusieurs étiquettes extraites dans une période pré-stockée avant de recevoir la demande concernant des informations auxiliaires ; et de préférence dans lequel l'unité de récupération est configurée pour comparer une étiquette sélectionnée à un mappage entre les étiquettes et des portions associées des informations auxiliaires et pour déterminer les une ou plusieurs portions d'informations auxiliaires correspondant à l'étiquette sélectionnée.

18. Système selon l'une quelconque des revendications 13 à 17, dans lequel le système est configuré pour sélectionner des étiquettes extraites des données vidéo et/ou audio transmises sur la base de la préférence du participant, dans lequel la préférence du participant est de préférence pré-stockée sur le système ou est déterminée par l'intermédiaire du comportement du participant et de préférence dans lequel le nombre d'étiquettes sélectionnées à partir des étiquettes extraites des données vidéo et/ou audio dépend du nombre ou de la fréquence de demandes reçues concernant des informations auxiliaires.

19. Système selon l'une quelconque des revendications 13 à 18, le système comprenant une unité de pré-traitement configurée pour recevoir des informations auxiliaires, traiter les informations auxiliaires reçues pour obtenir une ou plusieurs étiquettes à partir des informations auxiliaires, mapper les une ou plusieurs étiquettes d'informations auxiliaires obtenues sur une ou plusieurs portions associées des informations auxiliaires et stocker les informations auxiliaires, les étiquettes, et le mappage entre les étiquettes et des portions associées des informations auxiliaires sur l'unité de stockage, l'unité de pré-traitement étant de préférence configurée pour réaliser au moins un des faits suivants :
- appliquer une analyse de texte et/ou une récapitulation de texte sur les informations auxiliaires pour obtenir des étiquettes et leurs portions de texte associées d'informations auxiliaires ;
- collationner des étiquettes en comparant les étiquettes à un compendium pré-stocké pour accroître les étiquettes avec des synonymes et des formes de racine ;
- stocker les étiquettes et le mappage avec des portions d'informations auxiliaires sur l'unité de stockage, de préférence dans un index d'étiquette ou dans au moins un fichier d'index d'étiquette.

20. Produit programme d'ordinateur comprenant un code pour réaliser le procédé selon l'une quelconque des revendications 1 à 12, lorsqu'il est exécuté sur un dispositif électronique, tel qu'un ordinateur.
